# EUROPÄISCHE PATENTSCHRIFT

(11) **EP 2 768 300 B1**
(45) Veröffentlichungstag und Bekanntmachung des Hinweises auf die Patenterteilung: **27.09.2017**
(21) Anmeldenummer: 12772900.2
(22) Anmeldetag: 01.10.2012
(51) Int. Cl.: A01K 13/00, A61D 11/00, B08B 7/00, C11D 7/20, C11D 7/26, C11D 17/00, B65D 85/00, C11D 3/20, C11D 3/48, C11D 17/04

(54) **HAUSTIERPFOTENREINIGUNGSMITTEL**
CLEANING AGENT FOR PAWS OF DOMESTIC ANIMALS
AGENT DE NETTOYAGE DES PATTES D'ANIMAUX DOMESTIQUES

(30) Priorität: 19.10.2011 CH 169702011
(43) Veröffentlichungstag der Anmeldung: 27.08.2014
(73) Patentinhaber: Joker AG, 3210 Kerzers/FR (CH)
(72) Erfinder: FLURY, Meinrad, 3210 Kerzers (CH)
(74) Vertreter: Feldmann, Clarence Paul
(86) Internationale Anmeldenummer: PCT/EP2012/069364
(87) Internationale Veröffentlichungsnummer: WO 2013/056972

(56) Entgegenhaltungen:
- WO-A1-2011/113796
- WO-A2-02/055642
- CH-A2- 702 966
- US-A1- 2011 239 955

## Beschreibung

Die vorliegende Erfindung betrifft ein Haustierpfotenreinigungsmittel zum Entfernen von Feststoffpartikeln von Haustierpfoten.

Es ist ein altbekanntes Problem, dass Haustiere, insbesondere Hunde und Katzen nach ihrem Aufenthalt im Freien, je nach der Witterung, mehr oder weniger stark verschmutzte Pfoten haben und diesen Schmutz folglich ins Haus tragen. Der Hundebesitzer weiss dies und wird, wenn er nach einem Ausgang mit dem Hund nach Hause kommt, mit einem Lappen oder einer Bürste die Pfoten reinigen. Eine solche Reinigung ist oftmals schwierig zu bewerkstelligen, da viele Hunde eine solche Reinigung ungern über sicher ergehen lassen.

Noch problematischer ist dies bei Katzen die einen freien Ausgang haben. Sogar wenn man die Katze erst auf ihr Miauen hin in das Haus lässt, so ist eine Reinigung der Pfoten kaum möglich. Noch problematischer ist es dann, wenn eine sogenannte Katzenschleuse vorhanden ist, durch die die Katze freien Ein- und Ausgang hat. Neben der Schwierigkeit der Reinigung von Haustierpfoten ist auch deren Pflege schwierig. An den Pfoten tragen Hunde und Katzen immer auch bakterielle, fungizide, virelle und sporide Verunreinigungen. Diese lassen sich mit einer Bürste oder einem trockenen Lappen nicht entfernen. Zwar sind auf dem Markt veterinäre Medikamente erhältlich die zur Pfotenpflege geeignet sind, doch werden solche Mittel praktisch nur sporadisch oder bei einer Verletzung bzw. Entzündung an den Pfoten verwendet.

Bekannt sind selbstverständlich diverse Socken oder Schuhe für Haustiere die man diesen vor dem Spaziergang anziehen soll.

Im Dokument KR 20040099871 hingegen wird eine Art Staubsauger vorgeschlagen, um das Fell eines Haustieres bei bakteriellen oder parasitärem Befall zu reinigen.

Eine andere Lösung sieht das japanische Patent JP 4142722 vor. Hier wird eine Pfotenabstreifmatte zusammen mit Reinigungshandschuhen vorgeschlagen.

Letztlich wird im Dokument US 6745721 B ein Gerät vorgeschlagen mit darin untergebrachten rotierender Bürste und einer Abstreifmatte, die zusammen in einem Gehäuse untergebracht sind.

Es ist nunmehr die Aufgabe der vorliegenden Erfindung ein Haustierpfotenreinigungsmittel zu schaffen, welches bei einem Haustier zur schnelleren und einfacheren Pfotenreinigung benutzt werden kann.

Es ist eine weitere Aufgabe der vorliegenden Erfindung, eine optimale Benutzungsmöglichkeit des Haustierpfotenreinigungsmittels anzubieten.

Die erste Aufgabe löst ein Haustierpfotenreinigungsmittel zum Entfernen von Feststoffpartikeln von Haustierpfoten, welches die Merkmale des kennzeichnenden Teiles des Patentanspruches 1 aufweist. Die zweite Aufgabe löst eine Verwendung gemäss Anspruch 10. Bevorzugterweise besteht das erfindungsgemäss Haustierpfotenreinigungsmittel aus einer Knetmasse, die natürliche Polygalactomanane, 75 bis 95 Gew.% gebundenes Wasser und ein desinfizierendes Lösungsmittel aus der Gruppe der gesättigten, einwertigen Alkohole enthält. Eine solche Knetmasse mit einem besonders hohen Anteil an gebundenem Wasser stellt eine ideale Basismasse zur Einbringung diverser Wirkmittel, die entsprechende nachfettende, entzündungshemmende, desinfizierende, antiseptische und regenerierende Wirkung haben.

Weitere vorteilhafte Ausgestaltungsformen des erfindungsgemässen Haustierpfotenreinigungsmittels gehen aus den abhängigen Ansprüchen hervor und deren Bedeutung und Wirkungsweise wird nachfolgend erläutert.

In der beigefügten Zeichnung ist die bevorzugte Verwendung des erfindungsgemässen Haustierpfotenreinigungsmittels dargestellt. Es zeigt:

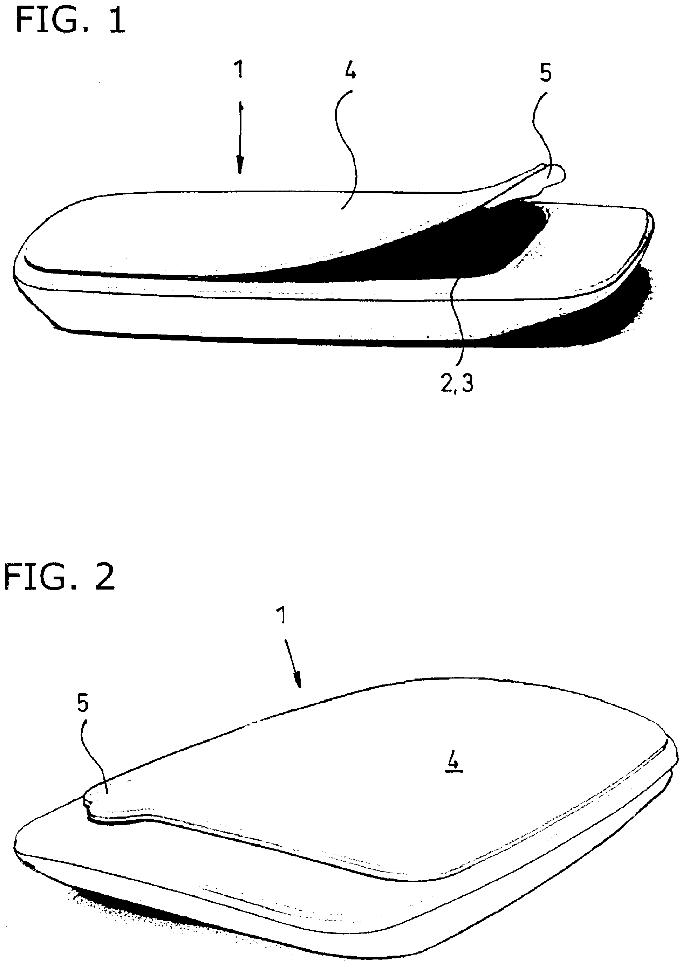

- Fig. 1: Eine perspektivische Seitenansicht eines bevorzugten Behälters zur Verwendung des Mittels mit teilweise angehobenem Deckel, und
- Fig. 2: denselben Behälter mit geschlossenem Deckel.

Basis für das hier vorgeschlagene Haustierpfotenreinigungsmittel zum Entfernen von Feststoffpartikeln von Haustierpfoten basiert auf einer Knetmasse, die in gewissen Rezepturen bereits seit vielen Jahren als Kinderspielzeug bekannt ist. Diese Masse wurde in entsprechender Anpassung in der EP 1373449 B offenbart. Diese Masse, die die Anmelderin unter ihrer registrierten Marke "Cyber-Clean®" zur Reinigung insbesondere von Computertastaturen vorgesehen hat. Dieser Masse werden nun entsprechende für die Haustierpfote pflegenden Mittel beigegeben.

Damit die Knetmasse besonders aufnahmefähig ist, wird vorgeschlagen, diese Knetmasse aus natürlichem Polygalactomanane mit einem Anteil von 75 Gew.% bis 95 Gew.% gebundenes Wasser zu bilden, indem ein desinfizierendes Lösungsmittel aus der Gruppe der gesättigten, einwertigen Alkohole enthält. Als natürlich Polygalactomanane eignen sich besonders Guamkern- oder Johannisbrotkernmehl.

Für die tägliche Pflege der Haustierpfoten ist es besonders sinnvoll, diesem ein nachfettendes und regenerierendes Mittel beizugeben. Besonders geeignet ist hierfür Lanolin. Lanolin wirkt regenerierend, sowohl für die Haut als auch für die Haare und die verhornten Anteile der Pfoten.

Bevorzugterweise ist dem Haustierpfotenreinigungsmittel als antiseptisches Desinfektionsmittel Zinkoxyd beigegeben.

Des weiteren kann man der Knetmasse bis zu 1 Gew.% Phenoxylethanol als entzündungshemmendes Bakterizid beigeben. Phenoxylethanol ist eine farblose Flüssigkeit mit schwach aromatischem, rosenartigem Geruch. Phenoxylethanol ist in geringem Masse auch wasserlöslich. Es ist zudem vorteilhaft, der Knetmasse verschiedene haut- bzw. zellregenerierende Mittel beizufügen. Insbesondere Allantoin fördert den Zellaufbau und wirkt somit zellregenerierend. Ebenso regenerierend wirkt Dexpanthenol, welches ebenfalls in geringen Mengen eingebracht sein kann, wobei Dexpanthenol auch der Wundheilung dient.

Verletzungen an Haustierpfoten gehören zu den häufigsten Verletzungen bei Haustieren. Es ist daher durchaus sinnvoll der Knetmasse solche wundheilende Mittel beizufügen. Ebenfalls sinnvoll ist es entsprechend auch um desinfektionierende Mittel beizugen, wie vorzugsweise Jod. Vielfach haben Haustiere kleinste Verletzungen an den Pfoten, die das Tier selbst und der Haustierbesitzer schon gar nicht bemerken. Kommt jedoch ein Haustier täglich mit seinen Pfoten mit dem erfindungsgemässen Haustierpfotenreinigungsmittel in Kontakt, welches nachfettende, entzündungshemmende, desinfizierende, antiseptische und regenerierende Mittel enthält, so wird dadurch sichergestellt, dass solche kleine und Kleinstverletzungen nicht zu schlimmen Infektionen führen.

Die Knetmasse des Haustierpfotenreinigungsmittels enthält bevorzugt als Grundzusammensetzung folgende Komponenten:
- Wasser (H₂O: 65 - 75 Gew.%
- Ethanol 10 - 20 Gew.%
- Propantriol 5 - 8 Gew.%
- nativer Guar 3 - 7 Gew.%
- Bor (als Borsäure) 0,1 - 0,5 Gew.%
- Duftstoff 0.001 - 0.1 Gew.%
- Farbstoff 0.001 - 0.003 Gew.%

Das erfindungsgemässe Haustierpfotenreinigungsmittel kann bevorzugterweise zusätzlich Polyhexanid als Antiseptikum enthalten. Dieses ist besonders als Wundantiseptikum zur Behandlung infizierter Wunden geeignet. Aufgrund der guten Gewebeverträglichkeit und der klinisch offensichtlichen Wundheilungsförderung ist Polyhexanid insbesondere zur Behandlung schlecht heilender, chronischer und sehr empfindlicher Wunden geeignet.

In der bevorzugten Verwendung wird das Haustierpfotenreinigungsmittel in einem flachen Behälter 1 eingebracht mit einer relativ untiefen Mulde 2, in der das Haustierpfotenreinigungsmittel 3 eingebracht wird. Dank der gegebenen Form wird eine relativ grosse Fläche zur Verfügung gestellt. Der Behälter ist mit einem weichen Deckel 4 hermetisch verschliessbar um ein Austrocknen zu vermeiden. Entsprechend passt der Deckel 4 form-schlüssig in die Öffnung der Mulde 2. Mittels einer Greifflasche 5 kann der Deckel 4 einfach entfernt werden.

In der Zeichnung ist eine mögliche Ausführungsform eines solchen Behälters dargestellt. Damit die Haustiere keinen Widerwillen haben die Knetmasse zu betreten, wird man bevorzugterweise dieser mindestens ein ätherisches Öl als geruchsvermittelndes Mittel einsetzen. Hierzu kommen bevorzugterweise Kamille, Arnika, Honig oder Baldrian in Frage. Einerseits sind die Gerüche dieser ätherischen Öle bei verschiedenen Haustieren sehr beliebt. Insbesondere Kamille, Arnika und Honig werden von Hunden geschätzt, während Baldrian besonders Katzen anzieht. Der Vorteil dieser ätherischen Öle besteht auch darin, dass diese zusätzlich eine antiseptische Wirkung aufweisen. Verwendet man das Haustierpfotenreinigungsmittel in einem flachen Behälter der in den Ausmassen so gewählt und abgestimmt ist, dass dieser flache Behälter praktisch als Einschubteil in einem Haustiertor oder in einer Haustierschleuse passt, so muss das Haustier zwangsläufig über das erfindungsgemässe Mittel laufen. In einem solchen Fall kann dieses auch praktisch geruchsstofffrei sein.

Ist ein Haustier mehrmals über die Masse gelaufen, so wird der Haustierbesitzer diese Masse der flachen Mulde entnehmen, sie kurz durchkneten und wieder einlegen. Auf diese Weise lässt sich das Mittel praktisch regenerieren, da die neue, zur Verfügung stehende Oberfläche praktisch wieder voll wirksam ist. Die Masse braucht folglich immer nur nach etlichen Wochen ausgewechselt zu werden. Es ist auch nicht nötig, dass der Haustierbesitzer zum Durchkneten der Masse spezielle Schutzhandschuhe trägt, da sämtliche beigegebenen Wirkstoffe auch in der Humanmedizin durchaus eingesetzt werden können und auch der Haustierbesitzer praktisch ein händepflegendes Mittel erhält.

### Bezugszeichenliste

- 1: Behälter
- 2: Mulde
- 3: Mittel
- 4: Deckel
- 5: Greifflasche

## Patentansprüche

1. Haustierpfotenreinigungsmittel zum Entfernen von Feststoffpartikeln von Haustierpfoten, **dadurch gekennzeichnet, dass** eine hochviskose Knetmasse mit einer Viskosität von - 50'000 bis 150'000 mPa.s, vorzugsweise von 80'000 bis 120'000 mPa.s, die Haut nachfettende, entzündungshemmende, desinfizierende, antiseptische und regenerierende Mittel beigegeben sind, wobei die Masse so beschaffen ist, dass durch einige Knetbewegungen Verunreinigungen in die Masse einknetbar sind, als nachfettendes und regenerierendes Mittel Lanolin beigegeben ist zur Regeneration von Haut, Horn und Haaren.

2. Haustierpfotenreinigungsmittel nach Anspruch 1, **dadurch gekennzeichnet, dass** die Knetmasse natürliche Polygalactomanane, 75 Gew.% bis 95 Gew.% gebundenes Wasser und ein desinfizierendes Lösungsmittel aus der Gruppe der gesättigten, einwertigen Alkohole enthält.

3. Haustierpfotenreinigungsmittel nach Anspruch 1, **dadurch gekennzeichnet, dass** als antiseptisches Desinfektionsmittel Zinkoxyd beigegeben ist.

4. Haustierpfotenreinigungsmittel nach Anspruch 1, **dadurch gekennzeichnet, dass** die Knetmasse bis zu 1 Gew.% Phenoxylethanol als entzündungshemmendes Bakterizid beigegeben ist.

5. Haustierpfotenreinigungsmittel nach Anspruch 1, **dadurch gekennzeichnet, dass** die Knetmasse als regenerierendes Mittel Allantoin enthält zur Förderung des Zellaufbaus und der Zellregenerierung.

6. Haustierpfotenreinigungsmittel nach Anspruch 1, **dadurch gekennzeichnet, dass** die Knetmasse als regenerierendes Mittel Dexpanthenol zur Wundheilung enthält.

7. Haustierpfotenreinigungsmittel nach Anspruch 1,, **dadurch gekennzeichnet, dass** die Knetmasse als desinfizierendes Mittel Jod enthält.

8. Haustierpfotenreinigungsmittel nach Anspruch 1, **dadurch gekennzeichnet, dass** die Knetmasse mindestens ein ätherisches Öl als geruchsvermittelndes Mittel, vorzugsweise aus der Gruppe von Kamille, Arnika, Honig oder Baldrian, enthält, die auch eine antiseptische Wirkung aufweisen.

9. Haustierpfotenreinigungsmittel nach Anspruch 1, **dadurch gekennzeichnet, dass** die Knetmasse als Grundzusammensetzung folgende Komponenten enthält:
- Wasser (H₂O: 65 - 75 Gew.%
- Ethanol 10 - 20 Gew.%
- Propantriol 5 - 8 Gew.%
- nativer Guar 3 - 7 Gew.%
- Bor (als Borsäure) 0,1 - 0,5 Gew.%
- Duftstoff 0.001 - 0.1 Gew.%
- Farbstoff 0.001 - 0.003 Gew.%

10. Verwendung des Haustierpfotenreinigungsmittels nach einem der Ansprüche 1 bis 9, **dadurch gekennzeichnet, dass** dieses in einer Mulde eines flachen Behälters eingebracht ist und mit einem Deckel oder Klappe verschliessbar ist.

11. Verwendung des Haustierpfotenreinigungsmittels nach Anspruch 10, **dadurch gekennzeichnet, dass** der flache Behälter in oder vor einer Schleuse oder einem Tor für Haustiere angeordnet ist.

## Claims

1. A cleaning agent for paws of domestic animals for removing solid particles from the paws of domestic animals, **characterized in that** a highly viscous modelling material having a viscosity of ∼ 50000 to 150000 mPa.s, preferably of 80000 to 120000 mPa.s, has added to it skin-lubricating, anti-inflammatory, disinfecting, antiseptic and regenerating agents, wherein the material is constituted such that contaminants can be kneaded into the material by means of a few kneading movements, lanolin is added as lubricating and regenerating agent for the regeneration of skin, keratin and hair.

2. The cleaning agent for paws of domestic animals according to claim 1, **characterized in that** the modelling material contains natural polygalactomannans, 75 to 95 % by weight of bound water and a disinfecting solvent from the group of saturated, monovalent alcohols.

3. The cleaning agent for paws of domestic animals according to claim 1, **characterized in that** zinc oxide is added as antiseptic disinfectant.

4. The cleaning agent for paws of domestic animals according to claim 1, **characterized in that** up to 1 % by weight phenoxylethanol is added to the modelling material as anti-inflammatory bactericide.

5. The cleaning agent for paws of domestic animals according to claim 1, **characterized in that** the modelling material contains allantoin as regenerating agent for promoting cell-building and cell regeneration.

6. The cleaning agent for paws of domestic animals according to claim 1, **characterized in that** the modelling material contains dexpanthenol as regenerating agent for wound healing.

7. The cleaning agent for paws of domestic animals according to claim 1, **characterized in that** the modelling material contains iodine as disinfecting agent.

8. The cleaning agent for paws of domestic animals according to claim 1, **characterized in that** the modelling material contains at least one essential oil as fragrant agent, preferably from the group of chamomile, arnica, honey or valerian, which also have an antiseptic effect.

9. The cleaning agent for paws of domestic animals according to claim 1, **characterized in that** the modelling material contains as basic composition the following components:
- water (H₂O) 65 - 75 % by weight
- ethanol 10 - 20 % by weight
- propanetriol 5 - 8 % by weight
- native guar 3 - 7 % by weight
- boron (as boric acid)
0.1 - 0.5 % by weight
- fragrance 0.001 - 0.1 % by weight
- colouring 0.001 - 0.003 % by weight.

10. Use of the cleaning agent for paws of domestic animals according to one of claims 1 to 9, **characterized in that** it is placed in a recess of a flat container and is able to be closed by a cover or flap.

11. The use of the cleaning agent for paws of domestic animals according to claim 10, **characterized in that** the flat container is arranged in or in front of a double entry system or a portal for domestic animals.

## Revendications

1. Produit destiné à nettoyer les pattes d'animaux domestiques, pour retirer des particules de solides des pattes d'animaux domestiques, **caractérisé en ce qu'**on ajoute à des produits relipidants, anti-inflammatoires, désinfectants, antiseptiques et régénérants une pâte hautement visqueuse avec une viscosité de ≈ 50'000 à 150'000 mPa.s, de préférence de 80'000 à 120'000 mPa.s, la pâte étant texturée de telle sorte que par quelques mouvements de malaxage, des impuretés puissent être malaxées dans la pâte.

2. Produit destiné à nettoyer les pattes d'animaux domestiques selon la revendication 1, **caractérisé en ce que** la pâte contient des polygalactomananes naturels, de 75 % en poids à 95 % en poids d'eau liée et une solution désinfectante du groupe des alcools monovalents saturés.

3. Produit destiné à nettoyer les pattes d'animaux domestiques selon la revendication 1, **caractérisé en ce qu'**en tant que produit désinctant antiseptique, on ajoute de l'oxyde de zinc.

4. Produit destiné à nettoyer les pattes d'animaux domestiques selon la revendication 1, **caractérisé en ce qu'**à la pâte est ajouté jusqu'à 1 % en poids de phénoxyéthanol en tant qu'antibactérien antiinflammatoire.

5. Produit destiné à nettoyer les pattes d'animaux domestiques selon la revendication 1, **caractérisé en ce qu'**en tant que produit régénérant, la pâte contient de l'allantoïne, pour favoriser la construction cellulaire et la régénération

6. Produit destiné à nettoyer les pattes d'animaux domestiques selon la revendication 1, caractérisé en ce la pâte contient du dexpanthénol en tant que produit régénérant, pour guérir les lésions.

7. Produit destiné à nettoyer les pattes d'animaux domestiques selon la revendication 1, **caractérisé en ce que** la pâte contient de l'iode en tant que produit désinfectant.

8. Produit destiné à nettoyer les pattes d'animaux domestiques selon la revendication 1, **caractérisé en ce que** la pâte contient au moins une huile essentielle en tant que produit odorant, de préférence du groupe comprenant la camomille, l'arnica, le miel ou la valériane qui ont aussi un effet antiseptique.

9. Produit destiné à nettoyer les pattes d'animaux domestiques selon la revendication 1, **caractérisé en ce que** la pâte comporte en tant que composition de base les composants suivants :
- de l'eau (H₂O: de 65 à 75 % en poids
- de l'éthanol de 10 à 20 % en poids
- du propantriol de 5 à 8 % en poids
- du guar natif de 3 à 7 % en poids
- du bor (sous forme d'acide borique)
de 0,1 à 0,5 % en poids
- du parfum d de 0,001 à 0,1 % en poids
- du colorant de 0,001 à 0,003 % en poids

10. Utilisation du produit destiné à nettoyer les pattes d'animaux domestiques selon l'une quelconque des revendications 1 à 9, **caractérisé en ce qu'**on l'introduit dans la cavité d'un récipient plat et il peut se fermer par un couvercle ou un volet.

11. Utilisation du produit destiné à nettoyer les pattes d'animaux domestiquess selon la revendication 10, **caractérisé en ce que** le récipient plat est placé dans ou à l'avant d'un sas ou d'un portail pour des animaux domestiques.
